# EUROPEAN PATENT APPLICATION

(11) **EP 4 582 324 A1**
(43) Date of publication of application: **09.07.2025**
(21) Application number: 23871025.5
(22) Date of filing: 28.09.2023
(51) Int. Cl.: B60W 50/08

(54) **VEHICLE CONTROL METHOD AND CONTROL APPARATUS, AND VEHICLE**

(30) Priority: 30.09.2022 CN 202211214762
(71) Applicant: Shenzhen Yinwang Intelligent Technologies Co., Ltd., Shenzhen, Guangdong 518129 (CN)
(72) Inventor: WANG, Junhan, Shenzhen, Guangdong 518129 (CN); PENG, Lei, Shenzhen, Guangdong 518129 (CN); ZHANG, Binbin, Shenzhen, Guangdong 518129 (CN); JIANG, Siwen, Shenzhen, Guangdong 518129 (CN); CHAI, Benben, Shenzhen, Guangdong 518129 (CN); LIU, Fengyu, Shenzhen, Guangdong 518129 (CN)
(74) Representative: Pfenning, Meinig & Partner mbB
(86) International application number: PCT/CN2023/122548
(87) International publication number: WO 2024/067800

(57) **Abstract**

Embodiments of this application provide a vehicle control method, a vehicle control apparatus, and a vehicle. The vehicle includes a battery and a range extender. When a first configuration mode of the vehicle is activated, the range extender supplies power to the vehicle when an actual SOC value of the battery is less than or equal to a first threshold. When a second configuration mode is activated, the range extender supplies power to the vehicle when the actual SOC value of the battery is less than or equal to a second threshold. The second threshold is less than the first threshold. When a third configuration mode is activated, the range extender supplies power to the vehicle or idles when the actual SOC value of the battery is less than or equal to a third threshold. The third threshold is less than or equal to the first threshold and greater than the second threshold. The method includes: obtaining first status information of the vehicle when the second configuration mode and the third configuration mode are in an active state and the actual SOC value of the battery is less than or equal to the third threshold; and determining, based on the first status information of the vehicle, that the range extender supplies power to the vehicle or idles. The solutions of this application can improve user experience.

## Description

This application claims priority to Chinese Patent Application No. 202211214762.2, filed with the China National Intellectual Property Administration on September 30, 2022 and entitled "VEHICLE CONTROL METHOD AND CONTROL APPARATUS, AND VEHICLE", which is incorporated herein by reference in its entirety.

### TECHNICAL FIELD

Embodiments of this application relate to the field of vehicle technologies, and more specifically, to a vehicle control method and control apparatus, and a vehicle.

### BACKGROUND

Compared with other electric vehicles, extended range electric vehicles have advantages such as a simpler configuration system, a higher range, and lower costs, and have been widely applied in the field of electric vehicles currently. A range extender is configured in the extended range electric vehicle, and the range extender can provide additional electric energy to increase a range of the electric vehicle. An engine (such as a fuel engine) is used to drive a generator to generate electricity, to increase the range of the vehicle.

A configurable mode of a conventional extended range electric vehicle includes a hybrid electric vehicle (hybrid electric vehicle, HEV) mode and an electric vehicle (electric vehicle, EV) mode. However, improper mode switching often results in poor user experience. Therefore, how to improve user experience of using the extended range electric vehicle is a technical problem that needs to be urgently resolved.

### SUMMARY

Embodiments of this application provide a vehicle control method and control apparatus, and a vehicle, so that user experience of using an extended range electric vehicle can be improved.

According to a first aspect, a vehicle control method is provided, where a vehicle includes a battery and a range extender, and a configurable mode of the vehicle includes a first configuration mode, a second configuration mode, and a third configuration mode. When the first configuration mode is activated, the range extender enters a first operating mode when an actual SOC value of the battery is less than or equal to a first threshold; and in the first operating mode, the range extender is configured to supply power to the vehicle. When the second configuration mode is activated, the range extender enters the first operating mode when the actual SOC value of the battery is less than or equal to a second threshold, where the second threshold is less than the first threshold. When the third configuration mode is activated, the range extender enters the first operating mode or a second operating mode when the actual SOC value of the battery is less than or equal to a third threshold, where the third threshold is less than or equal to the first threshold and greater than the second threshold; and in the second operating mode, the range extender is configured to idle.

The method includes: obtaining first status information of the vehicle, when the second configuration mode and the third configuration mode are in an active state and the SOC value of the battery is less than or equal to the third threshold, where the first status information includes a power demand of the vehicle; and determining, based on the first status information, whether the range extender enters the first operating mode or the second operating mode.

That the range extender enters the first operating mode may be described as that the range extender is started, and the range extender is started so that the range extender is configured to supply power to the vehicle. That the range extender enters the second operating mode may be described as a pre-start of the range extender, and in the pre-start state, the range extender is configured to idle, so that the range extender is in a state of preparing for output (that is, an immediate power generation state).

In this embodiment of this application, when the second configuration mode and the third configuration mode are in the active state, the first status information of the vehicle may be obtained when the SOC value of the battery is less than or equal to the third threshold, and it is determined, based on the first status information, whether the range extender enters the first operating mode or the second operating mode. An SOC threshold for the range extender to enter the first operating mode can be reduced to the second threshold (that is, a start threshold of the range extender is reduced to the second threshold), so that the battery preferentially supplies power. In addition, when the actual SOC value of the battery is less than or equal to the third threshold, it may be determined, based on the first status information of the vehicle, whether the range extender enters the first operating mode or the second operating mode, to avoid a case in which the entire vehicle has an insufficient dynamic force due to the status information in a process in which the battery preferentially supplies power. This can improve user experience of using the extended range electric vehicle.

With reference to the first aspect, in some implementations of the first aspect, the determining, based on the first status information, whether the range extender enters the first operating mode or the second operating mode includes: if output power of the battery is greater than or equal to the power demand of the vehicle, controlling the range extender to operate in the second operating mode; or if output power of the battery is less than the power demand of the vehicle, controlling the range extender to operate in the first operating mode.

In this embodiment of this application, when the output power of the battery is greater than or equal to the power demand of the vehicle, the range extender may be controlled to operate in the second operating mode. When the output power of the battery is less than the power demand of the vehicle, the range extender may be controlled to operate in the first operating mode. This can ensure a dynamics performance level of the entire vehicle and improve user experience.

With reference to the first aspect, in some implementations of the first aspect, the method further includes: obtaining a user instruction, where the user instruction instructs to activate the second configuration mode and the third configuration mode; and controlling to activate the second configuration mode and the third configuration mode according to the user instruction.

In this embodiment of this application, the second configuration mode and the third configuration mode may be controlled to be activated according to the user instruction, that is, a user may determine, based on a willingness of the user, whether to activate the second configuration mode and the third configuration mode. This can improve user experience.

With reference to the first aspect, in some implementations of the first aspect, the method further includes: obtaining second status information of the vehicle, where the second status information of the vehicle includes a power-on status of the vehicle, a state of charge of the battery, and a first ambient temperature status of the vehicle; determining whether the second status information of the vehicle meets an entry condition of the second configuration mode and the third configuration mode; and if the second status information of the vehicle meets the entry condition, controlling to activate the second configuration mode and the third configuration mode; or if the second status information of the vehicle does not meet the entry condition, controlling to activate or maintain the first configuration mode.

In this embodiment of this application, whether the second status information of the vehicle meets the entry condition of the second configuration mode and the third configuration mode may be determined based on the second status information of the vehicle. The second configuration mode and the third configuration mode are controlled to be activated when the entry condition is met, and the second configuration mode and the third configuration mode are not controlled to be activated when the entry condition is not met. In this way, when the second status information does not meet the entry condition but forcible entering is performed, a case in which the entire vehicle has an insufficient dynamic force can be avoided, thereby improving user experience.

With reference to the first aspect, in some implementations of the first aspect, when the second configuration mode and the third configuration mode are in an active state, the method further includes: obtaining third status information of the vehicle, where the third status information of the vehicle includes a speed status of the vehicle, a second ambient temperature status of the vehicle, a climbing status of the vehicle, and an on-off status of the second configuration mode of the vehicle; determining whether the third status information of the vehicle meets an exit condition of the second configuration mode and the third configuration mode; and if any item in the third status information of the vehicle meets the exit condition, controlling to exit the second configuration mode and the third configuration mode; or if none of the items in the third status information of the vehicle meets the exit condition, controlling to maintain the second configuration mode and the third configuration mode to be in the active state.

In this embodiment of this application, whether the third status information of the vehicle meets the exit condition of the second configuration mode and the third configuration mode may be determined based on the third status information of the vehicle. Exiting is performed when the exit condition is met, and exiting is not performed when the exit condition is not met, to avoid a scenario in which a power demand or a dynamics performance demand is high and to ensure dynamics performance of the entire vehicle. This can improve user experience.

With reference to the first aspect, in some implementations of the first aspect, when the range extender operates in the first operating mode, the method further includes: controlling to activate the second configuration mode; or controlling to activate the second configuration mode and the third configuration mode.

In this embodiment of this application, when the range extender operates in the first operating mode, the second configuration mode may also be controlled to be activated; or the second configuration mode and the third configuration mode may be controlled to be activated. In other words, when the range extender operates in the first operating mode, the battery may also be forcibly used to supply power, so that user experience can be improved.

According to a second aspect, a vehicle control apparatus is provided, where a vehicle includes a battery and a range extender, and a configurable mode of the vehicle includes a first configuration mode, a second configuration mode, and a third configuration mode. When the first configuration mode is activated, the range extender enters a first operating mode when an SOC value of the battery is less than or equal to a first threshold; and in the first operating mode, the range extender is configured to supply power to the vehicle. When the second configuration mode is activated, the range extender enters the first operating mode when the SOC value of the battery is less than or equal to a second threshold, where the second threshold is less than the first threshold. When the third configuration mode is activated, the range extender enters the first operating mode or a second operating mode when the SOC value of the battery is less than or equal to a third threshold, where the third threshold is less than or equal to the first threshold and greater than the second threshold; and in the second operating mode, the range extender is configured to idle. The apparatus includes: an obtaining module, configured to obtain first status information of the vehicle when the second configuration mode and the third configuration mode are in an active state and the SOC value of the battery is less than or equal to the third threshold, where the first status information includes a power demand of the vehicle; and a processing module, configured to determine, based on the first status information, whether the range extender enters the first operating mode or the second operating mode.

With reference to the second aspect, in some implementations of the second aspect, if output power of the battery is greater than or equal to the power demand of the vehicle, the processing module is further configured to control the range extender to operate in the second operating mode; or if output power of the battery is less than the power demand of the vehicle, the processing module is further configured to control the range extender to operate in the first operating mode.

With reference to the second aspect, in some implementations of the second aspect, the obtaining module is further configured to obtain a user instruction, where the user instruction instructs to activate the second configuration mode and the third configuration mode; and the processing module is further configured to control to activate the second configuration mode and the third configuration mode according to the user instruction.

With reference to the second aspect, in some implementations of the second aspect, the obtaining module is further configured to obtain second status information of the vehicle, where the second status information of the vehicle includes a power-on status of the vehicle, a state of charge of the battery, and a first ambient temperature status of the vehicle; the processing module is further configured to determine whether the second status information of the vehicle meets an entry condition of the second configuration mode and the third configuration mode; and if the second status information of the vehicle meets the entry condition, the processing module is further configured to control to activate the second configuration mode and the third configuration mode; or if the second status information of the vehicle does not meet the entry condition, the processing module is further configured to control to activate or maintain the first configuration mode.

With reference to the second aspect, in some implementations of the second aspect, when the second configuration mode and the third configuration mode are in the active state, the obtaining module is further configured to obtain third status information of the vehicle, where the third status information of the vehicle includes a speed status of the vehicle, a second ambient temperature status of the vehicle, a climbing status of the vehicle, and an on-off status of the second configuration mode of the vehicle; the processing module is further configured to determine whether the third status information of the vehicle meets an exit condition of the second configuration mode and the third configuration mode; and if any item in the third status information of the vehicle meets the exit condition, the processing module is further configured to control to exit the second configuration mode and the third configuration mode; or if none of the items in the third status information of the vehicle meets the exit condition, the processing module is further configured to control to maintain the second configuration mode and the third configuration mode to be in the active state.

With reference to the second aspect, in some implementations of the second aspect, when the range extender operates in the first operating mode, the processing module is further configured to control to activate the second configuration mode; or control to activate the second configuration mode and the third configuration mode.

According to a third aspect, a vehicle control apparatus is provided, including an input/output interface, a processor, and a memory, where the processor is configured to control the input/output interface to receive and send a signal or information, the memory is configured to store a computer program, and the processor is configured to invoke the computer program from the memory and run the computer program, so that the control apparatus performs the control method according to any one of the first aspect or the possible implementations of the first aspect.

According to a fourth aspect, a computer-readable medium is provided, where the computer-readable medium stores program code, and when the program code is run on a computer, the computer is enabled to perform the control method according to any one of the first aspect or the possible implementations of the first aspect.

According to a fifth aspect, a computer program product is provided, including instructions, and when the instructions are run on a computer, the control method according to any one of the first aspect or the possible implementations of the first aspect is performed.

According to a sixth aspect, a computing device is provided, including at least one processor and a memory. The at least one processor is coupled to the memory, and is configured to read and execute instructions in the memory, to perform the control method according to any one of the first aspect or the possible implementations of the first aspect.

According to a seventh aspect, a chip is provided. The chip includes a processor and a data interface. The processor reads, by using the data interface, instructions stored in a memory, to perform the control method according to any one of the first aspect or the possible implementations of the first aspect.

Optionally, in an implementation, the chip may further include a memory. The memory stores instructions. The processor is configured to execute the instructions stored in the memory. When the instructions are executed, the processor is configured to perform the control method according to any one of the first aspect or the possible implementations of the first aspect.

According to an eighth aspect, a vehicle is provided, including the control apparatus according to any one of the second aspect or the possible implementations of the second aspect.

### BRIEF DESCRIPTION OF DRAWINGS

FIG. 1 is an example of a functional block diagram of a vehicle 100 according to an embodiment of this application;
FIG. 2 is an example diagram of a vehicle cabin scenario according to an embodiment of this application;
FIG. 3 is an example diagram of a vehicle control method according to an embodiment of this application;
FIG. 4 is an example diagram of icons for entering a second configuration mode and a third configuration mode according to an embodiment of this application;
FIG. 5 is an example diagram of buttons for entering a second configuration mode and a third configuration mode according to an embodiment of this application;
FIG. 6 is an example diagram of human-vehicle interaction according to an embodiment of this application;
FIG. 7 is an example diagram of other human-vehicle interaction according to an embodiment of this application;
FIG. 8 is an example diagram of a vehicle control procedure according to an embodiment of this application;
FIG. 9 is an example diagram of a vehicle control apparatus according to an embodiment of this application; and
FIG. 10 is a block diagram of a control apparatus according to an embodiment of this application.

### DESCRIPTION OF EMBODIMENTS

The following describes technical solutions in embodiments of this application with reference to accompanying drawings.

The solutions of this application may be applied to a vehicle. The vehicle is a vehicle in a broad sense, and may be a transportation means (such as a commercial vehicle, a passenger vehicle, a motorcycle, a flying car, or a train), an industrial vehicle (such as a forklift, a trailer, or a tractor), an engineering vehicle (such as an excavator, a bulldozer, or a crane), an agricultural device (such as a lawn mower or a harvester), a recreation device, a toy vehicle, or the like. A type of the vehicle is not specifically limited in embodiments of this application. For another example, the vehicle may be a transportation means such as an airplane or a ship.

Embodiments of this application may be further applied to another mobile apparatus in the fields of transportation, home, industry, construction, agriculture, entertainment, and the like. This is not limited in this application. For ease of description, the following is described by using a vehicle as an example.

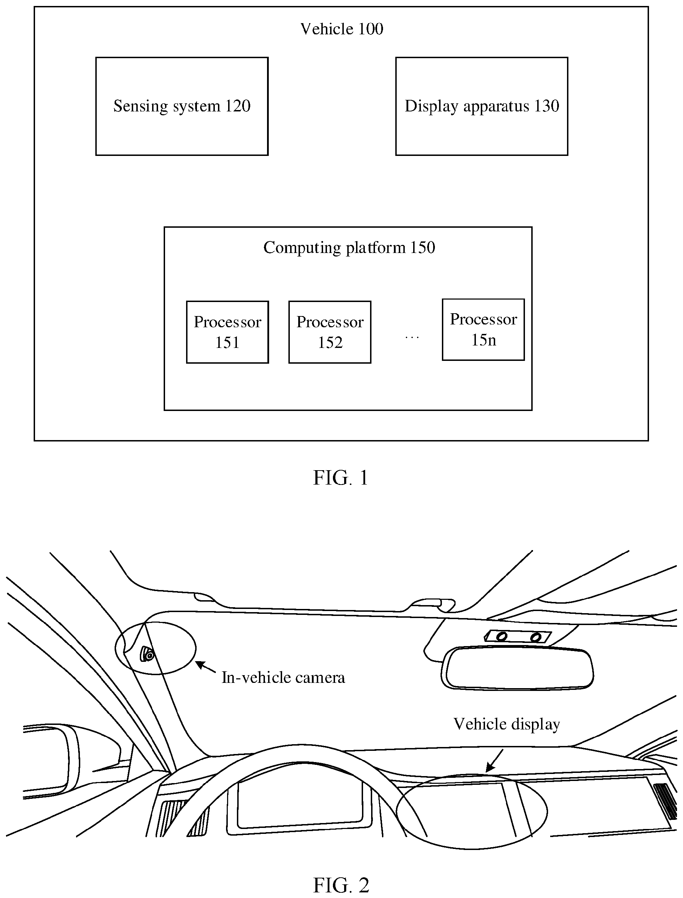

FIG. 1 is an example of a functional block diagram of a vehicle 100 according to an embodiment of this application. As shown in FIG. 1, the vehicle 100 may include a sensing system 120, a display apparatus 130, and a computing platform 150. The sensing system 120 may include several types of sensors that sense ambient information around the mobile apparatus 100. The ambient information may be road information, ambient temperature information, ambient brightness information, or the like. For example, the sensing system 120 may include a positioning system. The positioning system may be a global positioning system (global positioning system, GPS), or may be one or more of a Beidou system or another positioning system, an inertial measurement unit (inertial measurement unit, IMU), a lidar, a millimeter-wave radar, an ultrasonic radar, and a camera apparatus. The sensing system 120 may further include a sensor (such as an in-vehicle throttle depth sensor, an in-vehicle air quality monitor, a fuel gauge, or an engine oil temperature gauge) of an internal system of the monitored vehicle 100.

The display apparatus 130 is mainly classified into two types: a first type is a vehicle display, and a second type is a projection display, for example, an HUD. The vehicle display is a physical display, and is an important part of a vehicle-mounted information entertainment system. A plurality of displays may be disposed in a cabin, for example, a digital instrument display, a center console screen, a display in front of a passenger (also referred to as a front-row passenger) in a front passenger seat, a display in front of a rear-row passenger on the left, and a display in front of a rear-row passenger on the right, and even a vehicle window may be used as a display for display. The HUD, also referred to as a head-up display system, is mainly configured to project information such as a vehicle speed, a fuel amount, and navigation onto a windshield of the vehicle 100. After being reflected by the windshield, a virtual image is formed at a specific distance in front of a line of sight of a driver, so that the driver can see the information without a need to lower the head. This reduces line-of-sight transfer time of the driver, avoids a pupil change caused by a line-of-sight transfer of the driver, and improves driving safety and driving comfort. The HUD includes a combiner head-up display (combiner-HUD, C-HUD) system, a windshield head-up display (windshield-HUD, W-HUD) system, and an augmented reality head-up display AR-HUD system. Currently, a conventional HUD mainly displays vehicle instrument information such as a vehicle speed and a fuel amount. Compared with the conventional HUD, the AR-HUD has a larger field of view and a farther screen, and can integrate an AR image with real ambient information. This enhances a driver's acquisition of road information, and implements functions such as AR navigation, an adaptive cruise, and lane deviation warning.

Some or all functions of the vehicle 100 are controlled by the computing platform 150. The computing platform 150 may include one or more processors, for example, processors 151 to 15n (n is a positive integer). The processor is a circuit having a signal processing capability. In an implementation, the processor may be a circuit having an instruction reading and running capability, for example, a central processing unit (central processing unit, CPU), a microprocessor, a graphics processing unit (graphics processing unit, GPU) (that may be understood as a microprocessor), or a digital signal processor (digital signal processor, DSP). In another implementation, the processor may implement a specific function by using a logical relationship of a hardware circuit. The logical relationship of the hardware circuit is fixed or reconfigurable. For example, the processor is a hardware circuit implemented by an application-specific integrated circuit (application-specific integrated circuit, ASIC) or a programmable logic device (programmable logic device, PLD), for example, a field programmable gate array (field programmable gate array, FPGA). In the reconfigurable hardware circuit, a process in which the processor loads a configuration document to implement hardware circuit configuration may be understood as a process in which the processor loads instructions to implement functions of some or all of the foregoing units. In addition, the processor may alternatively be a hardware circuit designed for artificial intelligence, and may be understood as an ASIC, for example, a neural network processing unit (neural network processing unit, NPU), a tensor processing unit (tensor processing unit, TPU), or a deep learning processing unit (deep learning processing unit, DPU). In addition, the computing platform 150 may further include a memory. The memory is configured to store instructions, and some or all of the processors 151 to 15n may invoke the instructions in the memory to execute the instructions, to implement a corresponding function.

FIG. 2 is an example diagram of a vehicle cabin scenario according to an embodiment of this application. One or more cameras may be installed inside or outside a cabin, and are configured to capture an image of the inside or the outside of the cabin. The camera is, for example, a camera of a driver monitoring system (driver monitoring system, DMS), a camera of a cabin monitoring system (cabin monitoring system, CMS), or a camera of a dashcam (dashcam). For example, in FIG. 2, a camera is disposed on an A-pillar. A camera configured to capture an image of the inside and the outside of the cabin may be the same camera, or may be different cameras. In addition, a vehicle display is further disposed in the cabin. For example, in FIG. 2, a display disposed in a center console area. Optionally, one or more of information required for driving, audio and video entertainment information, vehicle configuration information, and the like may be displayed by using the vehicle display. In addition, human-vehicle interaction may be implemented by using the vehicle display. For example, a user may tap a related icon or enter an instruction on the display to control the vehicle. For another example, the vehicle may pop up a message on the vehicle display to remind the user, or the vehicle may display an operation option by using the vehicle display, so that the user makes choices according to an actual requirement. It should be understood that in embodiments of this application, a location of the camera that collects image information of the inside of the cabin is not specifically limited. The camera may be located on the A-pillar shown in FIG. 2, or may be located below a steering wheel, or may be located on a B-pillar, or may be located near a rear-view mirror, or the like.

The following briefly describes a background technology in the solutions of this application by using an extended range electric vehicle as an example.

The extended range electric vehicle includes a battery and a range extender. The range extender can provide additional electric energy to increase a range of the vehicle. The range extender is essentially a combination of an engine and a generator. The engine (such as a fuel engine) is used to drive the generator to generate electricity, to increase the range of the vehicle. To reduce vehicle costs, a capacity of the battery in the extended range electric vehicle is usually small. Therefore, a battery level is low at a low SOC (for example, below 20%), resulting in poor dynamics performance when the battery supplies power.

A configurable mode of a conventional extended range electric vehicle includes an HEV mode and an EV mode. When the HEV mode is activated, a vehicle system usually presets a threshold; and when an actual SOC value of the battery is greater than or equal to the threshold, the battery is used to supply power; or when an actual SOC value of the battery is less than the threshold, the range extender is started, and the engine is used to drive power generation. To ensure dynamics performance of the entire vehicle, a threshold set in a conventional solution is usually high (for example, 20%). This means that when the actual SOC value of the battery is high, the range extender is forcibly started. As a result, a user cannot continue to use remaining power of the battery. In this case, a user costs-conscious in using the vehicle has poor experience. For example, if a current driving scenario of the user does not have a high requirement for a dynamic force, the user could have reached a destination based on the remaining 20% power of the battery and then perform charging by using a charging pile. However, due to the threshold setting of the system, switching to the range extender is automatically performed to supply power. However, use of the range extender requires fuel oil. This increases the costs of using the vehicle, and increases noise, vibration, and harshness (noise, vibration, and harshness, NVH) of the entire vehicle, resulting in poor user experience.

The EV mode is also referred to as a pure electric mode. When the EV mode is activated, a start threshold of the range extender is low (for example, as low as 10%). In this case, a user conscious of the costs and noise may choose the EV mode. Therefore, even if the actual SOC value of the battery is lower than the threshold 20%, the battery may continue to be used to supply power. However, based on this mode, when the actual SOC value is between 10% and 20%, a case of an insufficient dynamic force of the entire vehicle may occur. This does not matter much when the vehicle travels on a common urban road, while in a high-speed scenario, a climbing scenario, a rapid-acceleration scenario, a low ambient temperature scenario, or a similar scenario, power supplied by the battery cannot provide a sufficient dynamic force to drive the vehicle to travel, resulting in poor user experience.

Based on this, an embodiment of this application provides a vehicle control method, so that dynamics performance of an entire vehicle is not affected when a battery is preferentially used to supply power, thereby improving user experience.

Before the control method provided in this embodiment of this application is described, it should be further noted that a vehicle in this application includes a battery and a range extender, and a configurable mode of the vehicle includes a first configuration mode, a second configuration mode, and a third configuration mode. The following describes the three configuration modes.

When the first configuration mode is activated, the range extender enters a first operating mode when an actual SOC value of the battery is less than or equal to a first threshold; and in the first operating mode, the range extender is configured to supply power to the vehicle. Specifically, when the first configuration mode is activated, the battery is used to supply power to the vehicle when the actual SOC value of the battery is greater than the first threshold; or when the actual SOC value of the battery is less than or equal to the first threshold, the range extender enters the first operating mode to supply power to the vehicle (specifically, an engine is used to drive power generation to supply power to the vehicle). The first configuration mode may also be understood as the HEV mode, and the first threshold may be, for example, 20%. It should be further noted that "when the first configuration mode is activated" may also be described as "in the first configuration mode" or "when the first configuration mode is entered", and "the range extender enters the first operating mode" may also be described as "the range extender is started". That the range extender is started means that the range extender is in a state of supplying power to the vehicle. This is not distinguished in embodiments of this application. It should be understood that that the range extender supplies power to the vehicle may be understood as that the range extender supplies power to the vehicle in a traveling process of the vehicle, to provide a dynamic force for the vehicle, or may be understood as that the range extender charges the battery in the vehicle.

When the second configuration mode is activated, the range extender enters the first operating mode when the actual SOC value of the battery is less than or equal to a second threshold, where the second threshold is less than the first threshold. Specifically, when the second configuration mode is activated, the battery is used to supply power to the vehicle when the actual SOC value of the battery is greater than the second threshold; or when the actual SOC value of the battery is less than or equal to the second threshold, the range extender enters the first operating mode to supply power to the vehicle. Because the second threshold is less than the first threshold, when the actual SOC value of the battery is within an interval between the first threshold and the second threshold, the battery may still be used to supply power. The second configuration mode may also be understood as the EV mode. Based on the second configuration mode, an SOC threshold (that is, a start threshold of the range extender) for the range extender to enter the first operating mode is low, and the battery may be preferentially used to supply power. For example, the second threshold may be 10%. It should be further noted that "when the second configuration mode is activated" may also be described as "in the second configuration mode" or "when the second configuration mode is entered". This is not distinguished in embodiments of this application.

When the third configuration mode is activated, the range extender enters the first operating mode or a second operating mode when the actual SOC value of the battery is less than or equal to a third threshold. In the second operating mode, the range extender is configured to idle. The third threshold is less than or equal to the first threshold and greater than the second threshold, and the second threshold may be, for example, 15%. That is, when the actual SOC value of the battery is less than or equal to the third threshold, the range extender may enter the first operating mode and the second operating mode. "The range extender enters the second operating mode" may also be described as "the range extender is pre-started" or "the engine is pre-started". The essence of starting the range extender is that the range extender (or the engine) is configured to be in an idling state, and the range extender is in a state of preparing for output through the idling state, that is, the range extender is enabled to prepare for a formal operating state through the idling state. The third configuration mode may also be understood as a pre-start extended mode. It should be further noted that "when the third configuration mode is activated" may also be described as "in the third configuration mode" or "when the third configuration mode is entered". This is not distinguished in embodiments of this application.

The first threshold, the second threshold, and the third threshold are merely examples. In an actual operation, the first threshold, the second threshold, and the third threshold need to be determined with reference to a specific case. This is not limited in this application. For example, in a case in which the first threshold is 20% and the second threshold is 10%, if the actual SOC value of the battery is between 15% and 20%, even if the battery is used to supply power, dynamics performance of the vehicle traveling in a high-speed scenario, a climbing scenario, a rapid-acceleration scenario, a low ambient temperature scenario, or a similar scenario is not affected or slightly affected. However, when the actual SOC value is lower than 15%, the dynamics performance of the vehicle traveling in a high-speed scenario, a climbing scenario, a rapid-acceleration scenario, a low ambient temperature scenario, or a similar scenario is severely affected. In this case, it may be set that the range extender may be pre-started when the actual SOC value is lower than 15%, so that the range extender enters the state of preparing for output, and the range extender can immediately enter a power generation state in a high-speed scenario, a climbing scenario, a rapid-acceleration scenario, a low ambient temperature scenario, or a similar scenario.

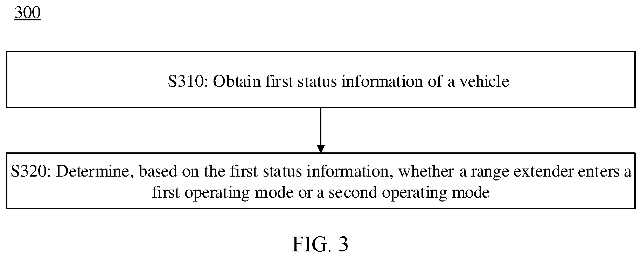

Based on the three configuration manners, the following describes in detail a vehicle control method provided in an embodiment of this application with reference to FIG. 3. FIG. 3 is an example diagram of a vehicle control method according to an embodiment of this application. It should be understood that the method 300 may be performed by the one or more processors in the computing platform 150. As shown in FIG. 3, the method 300 includes steps S310 and S320. The following describes these steps in detail.

Optionally, before the method 300 is performed, the second configuration mode and the third configuration mode may be activated first. In other words, control is implemented to enter the second configuration mode and the third configuration mode.

In an implementation, a vehicle may be controlled, based on a user operation, to enter the second configuration mode and the third configuration mode. Specifically, a user may send an instruction to the vehicle, where the instruction instructs to activate (that is, control the vehicle to enter) the second configuration mode and the third configuration mode. Then, the vehicle obtains the user instruction, and controls to activate (that is, control the vehicle to enter) the second configuration mode and the third configuration mode according to the user instruction.

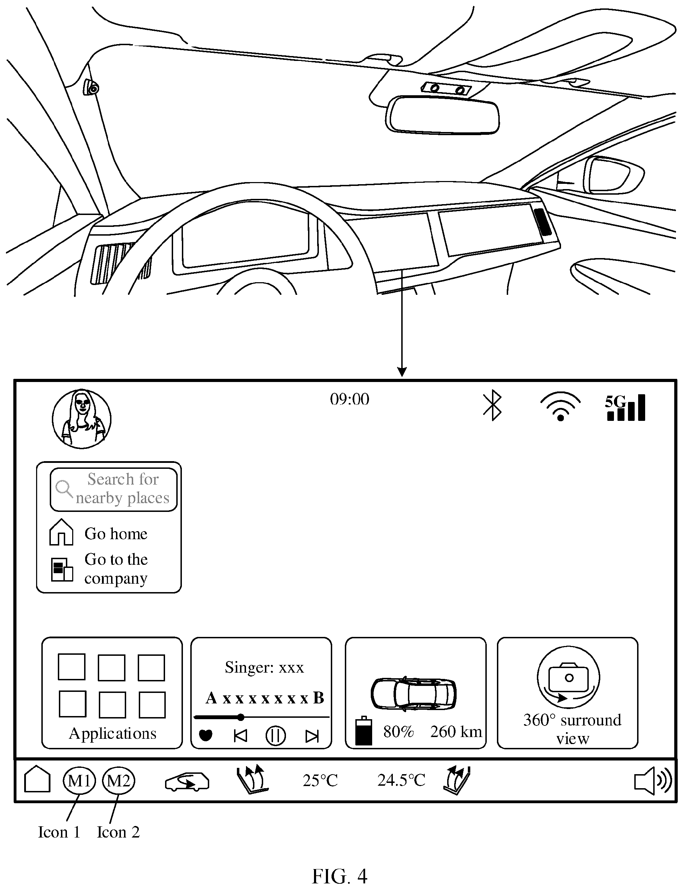

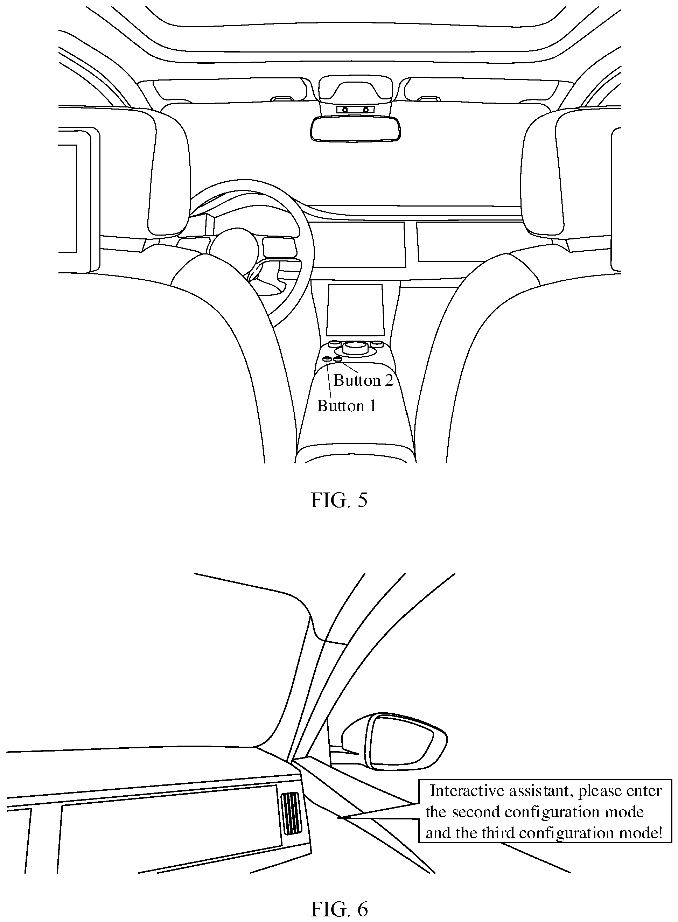

In an actual operation, icons (with reference to an icon 1 and an icon 2 in FIG. 4) for entering the second configuration mode and the third configuration mode may be set on the vehicle display in the vehicle cabin. The user may send an instruction to the vehicle by tapping the icons for entering the second configuration mode and the third configuration mode on the vehicle display, to instruct the vehicle to enter the second configuration mode and the third configuration mode. Alternatively, the user may tap a "setting" icon on the vehicle display, and choose a mode of the vehicle an in-vehicle setting system, to indicate the vehicle to enter the second configuration mode and the third configuration mode. Alternatively, buttons (with reference to a button 1 and a button 2 in FIG. 5) for entering the second configuration mode and the third configuration mode may be disposed in a vehicle cabin. The user may send an instruction to the vehicle by tapping or flipping the buttons to enter the second configuration mode and the third configuration mode, to instruct the vehicle to enter the second configuration mode and the third configuration mode. Alternatively, the user may send an instruction to the vehicle by using a voice, to instruct the vehicle to enter the second configuration mode and the third configuration mode. For example, (with reference to FIG. 6), the user may send a voice "Interactive assistant, please enter the second configuration mode and the third configuration mode!" to the vehicle, to instruct the vehicle to enter the second configuration mode and the third configuration mode. It should be understood that the foregoing manners are merely examples, and do not constitute a limitation on the solutions of this application.

The second configuration mode and the third configuration mode may be implemented by using one icon or one button, that is, the icon or the button is taped, so that control may be implemented to enter the second configuration mode and the third configuration mode. Alternatively, control may be implemented to enter the second configuration mode and the third configuration mode by using two icons or two buttons, that is, the user may enter the second configuration mode by tapping the icon or the button of the second configuration mode, and enter the third configuration mode by tapping the icon or the button of the third configuration mode.

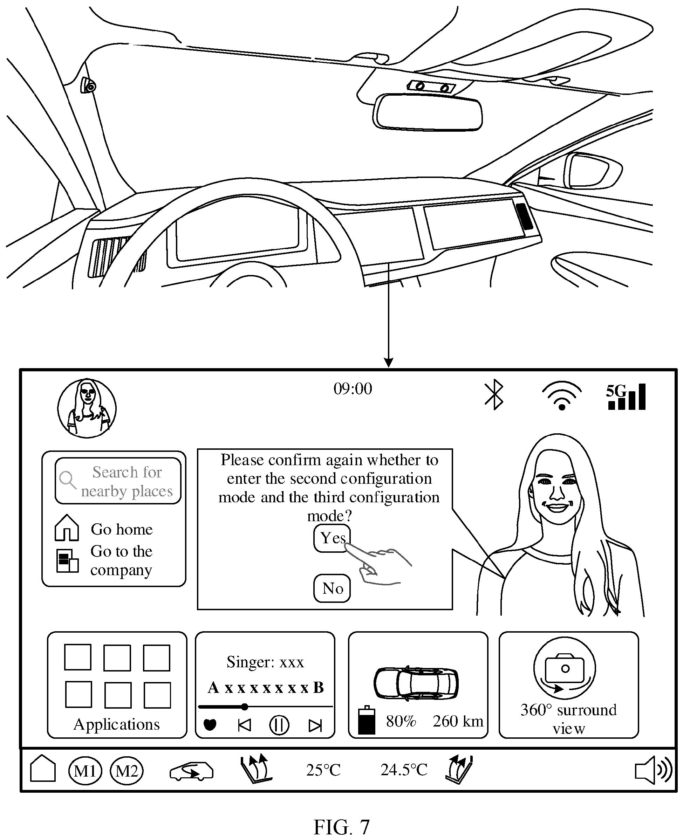

Optionally, after receiving the instruction of the user, the vehicle may prompt, by using the vehicle display or a voice prompt, the user to reconfirm whether to enter the second configuration mode and the third configuration mode (with reference to FIG. 7). It should be understood that reconfirmation can prevent the user from entering the second configuration mode and the third configuration mode due to an accidental touch.

Optionally, that the user sends an instruction to the vehicle may be that the user actively sends an instruction to the vehicle, or may be that the user sends an instruction to the vehicle after the vehicle initiates a reminder or a choice (for example, after the vehicle is powered on, the vehicle may consult, by using human-vehicle interaction, the user whether to enter the second configuration mode and the third configuration mode; for another example, when traveling in the first configuration mode, the vehicle may remind the user to perform an operation based on a willingness of the user when detecting that the range extender is to be started or the range extender is started).

In another implementation, alternatively, the vehicle may intelligently control to enter the second configuration mode and the third configuration mode. For example, the vehicle may spontaneously enter the second configuration mode and the third configuration mode based on a current scenario and a vehicle status. For another example, the vehicle may be set to preferentially start the second configuration mode and the third configuration mode. This is not limited in this application.

Optionally, when the range extender operates in the first operating mode (that is, when the range extender is started), the second configuration mode may also be controlled to be activated, or the second configuration mode and the third configuration mode are controlled to be activated (that is, the vehicle may be controlled to enter the second configuration mode, or the vehicle may be controlled to enter the second configuration mode and the third configuration mode), to enter a state in which the battery supplies power. That is, in a case in which the range extender is started, the battery may alternatively be forcibly used to supply power, so that user experience can be improved.

S310: Obtain first status information of the vehicle. Specifically, when the second configuration mode and the third configuration mode are in an active state and the SOC value of the battery is less than or equal to the third threshold, the first status information of the vehicle may be obtained.

Optionally, the first status information may include a power demand status of the vehicle. It should be understood that when the vehicle is in different scenarios, the vehicle may correspond to different power demands. For example, in a high-speed scenario, a climbing scenario, a rapid-acceleration scenario, or a similar scenario, a power demand is high, and correspondingly, a requirement for dynamics performance is high. When the vehicle stably travels on an urban traffic road, a power demand is low, and correspondingly, a requirement for dynamics performance is low.

In an actual operation, a magnitude of the power demand may be distinguished based on a throttle depth and holding time at the depth. Specifically, when the throttle depth is large and the duration is long, it is considered that a current power demand is large. Otherwise, it is considered that a current power demand is small.

Optionally, the first status information may further include information such as an ambient temperature status of the vehicle. This is not limited.

S320: Determine, based on the first status information of the vehicle, whether the range extender enters the first operating mode or the second operating mode. It may also be understood as determining, based on the first status information of the vehicle, whether the range extender needs to be in a pre-start state or an output state. Alternatively, it may be understood as determining, based on the first status information of the vehicle, whether the range extender enters an output state from a pre-start state. It should be understood that when the actual SOC value of the battery is just less than the third threshold, if it is determined, based on current first status information, that the range extender needs to enter the second operating mode, the range extender is first controlled to enter the second operating mode. If it is determined, based on updated first status information, that the range extender needs to enter the first operating mode in a subsequent vehicle traveling process, the range extender may be controlled to switch from the second operating mode to the first operating mode (that is, switch from the pre-start state to the output state).

In this embodiment of this application, when the second configuration mode and the third configuration mode are in the active state, the first status information of the vehicle may be obtained when the SOC value of the battery is less than or equal to the third threshold, and it is determined, based on the first status information, whether the range extender enters the first operating mode or the second operating mode. An SOC threshold for the range extender to enter the first operating mode can be reduced to the second threshold (that is, a start threshold of the range extender is reduced to the second threshold), so that the battery preferentially supplies power. In addition, when the actual SOC value of the battery is less than or equal to the third threshold, it may be determined, based on the first status information of the vehicle, whether the range extender enters the first operating mode or the second operating mode, to avoid a case in which the entire vehicle has an insufficient dynamic force due to the status information in a process in which the battery preferentially supplies power. This can improve user experience of using the extended range electric vehicle.

Optionally, when the power demand of the vehicle is greater than or equal to a preset value, the range extender may be controlled to operate in the first operating mode, or switch from the second operating mode to the first operating mode (that is, switch from the pre-start state to the output state). When the power demand of the vehicle is less than the preset value, the range extender is controlled to operate in the second operating mode (that is, in the pre-start state).

Optionally, when output power of the battery is greater than or equal to the power demand of the vehicle, the range extender may be controlled to operate in the second operating mode (that is, in the pre-start state); or when output power of the battery is less than the power demand of the vehicle, the range extender is controlled to operate in the first operating mode, or switch from the second operating mode to the first operating mode (that is, switch from the pre-start state to the output state). This can ensure a dynamics performance level of the entire vehicle and improve user experience. It should be understood that the output power of the battery is affected by a battery level and an ambient temperature. Usually, a lower battery level and a lower ambient temperature indicate a lower output power of the battery.

Optionally, in an actual operation, when it is detected that the throttle depth is greater than a preset value (for example, 70%) and the duration is longer than a preset value (for example, 3s), the range extender may be controlled to enter the output state from the pre-start state; and otherwise, the pre-start state is maintained.

It should be understood that there is a delay when the engine is started, and the delay is up to dozens of seconds. When the actual SOC value of the battery is less than or equal to the third threshold, if the range extender is started only in a scenario in which the power demand is high, the entire vehicle has an insufficient dynamic force in a start process. In this case, user experience is poor. However, in the solutions of this application, when the actual SOC value of the battery is less than or equal to the third threshold, if there is no high-power scenario, the range extender may be pre-started, and it is determined, based on the first status information of the vehicle, whether the range extender needs to enter the output state (that is, whether the range extender enters the output state from the pre-start state). In this case, the output state (that is, the power generation state) may be directly entered in a scenario in which the power demand is large. This avoids a case in which the entire vehicle has an insufficient dynamic force due to untimely output of the range extender.

It should be understood that a purpose of pre-starting the range extender is to enable a temperature of a cooling medium of the engine to reach a preset value (for example, 70°C). Based on the preset temperature, the range extender may be in the state of preparing for output. Therefore, for the pre-start of the range extender, if an actual temperature of the cooling medium of the engine in the range extender is less than the preset value (for example, 70°C), the engine needs to enter an idling state until the temperature of the cooling medium reaches the preset value. If the actual temperature of the cooling medium of the engine reaches the preset value, the engine does not need to idle, and the range extender may also be in the state of preparing for output. Therefore, based on the temperature of the cooling medium, it can be determined whether the engine needs to idle during the pre-start.

Optionally, the second configuration mode and the third configuration mode may further include an entry condition, and the second configuration mode and the third configuration mode can be controlled to be activated only when the entry condition is met.

Specifically, second status information of the vehicle may be first obtained; then it is determined whether the second status information of the vehicle meets the entry condition of the second configuration mode and the third configuration mode; and if the second status information of the vehicle meets the entry condition, the second configuration mode and the third configuration mode are controlled to be activated (that is, the vehicle is controlled to enter the second configuration mode and the third configuration mode); or if the second status information of the vehicle does not meet the entry condition, the first configuration mode is controlled to be activated or maintained (that is, the vehicle is controlled to enter the first configuration mode).

Optionally, the second status information of the vehicle includes a power-on status of the vehicle, a state of charge of the battery, a first ambient temperature status of the vehicle, and the like.

For example, it may be set that the entry condition is met when the vehicle is in a high-voltage power-on state, the actual SOC value of the battery is greater than a preset value (for example, 10%), and an ambient temperature of the vehicle is greater than a preset value (for example, 10°C), and the entry condition is not met when any one of the conditions is not met.

Optionally, the foregoing listed second status information of the vehicle is merely an example. Actually, more or less status information may be included, and needs to be determined with reference to an actual traveling scenario of the vehicle. This is not limited in this application. Based on this, the entry condition may also be adjusted with the second status information. For example, the second status information of the vehicle may further include whether the vehicle is in a high-speed traveling state. Correspondingly, the entry condition may further include that the entry condition is met only when a vehicle traveling speed is less than a preset value and predicted duration of high-speed traveling is shorter than a preset value.

In this embodiment of this application, whether the second status information of the vehicle meets the entry condition of the second configuration mode and the third configuration mode may be determined based on the second status information of the vehicle. The second configuration mode and the third configuration mode are controlled to be activated (that is, are entered) when the entry condition is met, and the second configuration mode and the third configuration mode are not controlled to be activated (that is, are not entered) when the entry condition is not met. In this way, when the second status information does not meet the entry condition but forcible entering is performed, a case in which the entire vehicle has an insufficient dynamic force can be avoided, thereby improving user experience.

Optionally, the second configuration mode and the third configuration mode may further include an exit condition. When the second configuration mode and the third configuration mode are in an active state, if the exit condition is met, the vehicle is controlled to exit the second configuration mode and the third configuration mode.

Specifically, after the vehicle enters the second configuration mode and the third configuration mode (that is, when the second configuration mode and the third configuration mode of the vehicle are in the active state), third status information of the vehicle may be further obtained, and then whether the third status information of the vehicle meets the exit condition of the second configuration mode and the third configuration mode is determined. If any item in the third status information of the vehicle meets the exit condition, controlling to exit the second configuration mode and the third configuration mode is performed; or if none of the items in the third status information of the vehicle meets the exit condition, controlling to maintain the second configuration mode and the third configuration mode to be in the active state is performed.

For example, the third status information of the vehicle may include a speed status of the vehicle, a second ambient temperature status of the vehicle, a climbing status of the vehicle, an on-off status of the second configuration mode of the vehicle, and the like.

For example, it may be set that the second configuration mode and the third configuration mode are exited when the third status information of the vehicle meets any one of the following exit conditions, and the second configuration mode and the third configuration mode are not exited when none of the following exit conditions is met.

For example, the exit condition may include: being in a high-speed operating condition (for example, a vehicle speed is greater than a preset value, for example, 135 km/h, and high-speed duration is longer than a preset value, for example, 5s), a climbing operating condition (for example, a power demand of the entire vehicle is greater than a preset value, for example, 60 kW, and duration is longer than a preset value, for example, 30s), a rapid acceleration operating condition (for example, a power demand of the entire vehicle is greater than a preset value, for example, 150 kW; rapid acceleration duration is longer than a preset value, for example, 5s; and an accumulated quantity of times within 60s is greater than a preset value, for example, 3 times), that an ambient temperature is less than or equal to a preset value (for example, 10°C), that forcibly disabling the second configuration mode is received, and the like. The foregoing exit conditions are merely examples, and do not constitute a limitation on the solutions of this application.

In this embodiment of this application, whether the third status information of the vehicle meets the exit condition of the second configuration mode and the third configuration mode may be determined based on the third status information of the vehicle. Exiting is performed when the exit condition is met, and exiting is not performed when the exit condition is not met, to avoid a scenario in which a power demand or a dynamics performance demand is high and to ensure dynamics performance of the entire vehicle. This can improve user experience.

It should be understood that during actual application, only the second configuration mode may be controlled to be entered, and the third configuration mode is not entered. This is not limited in this application.

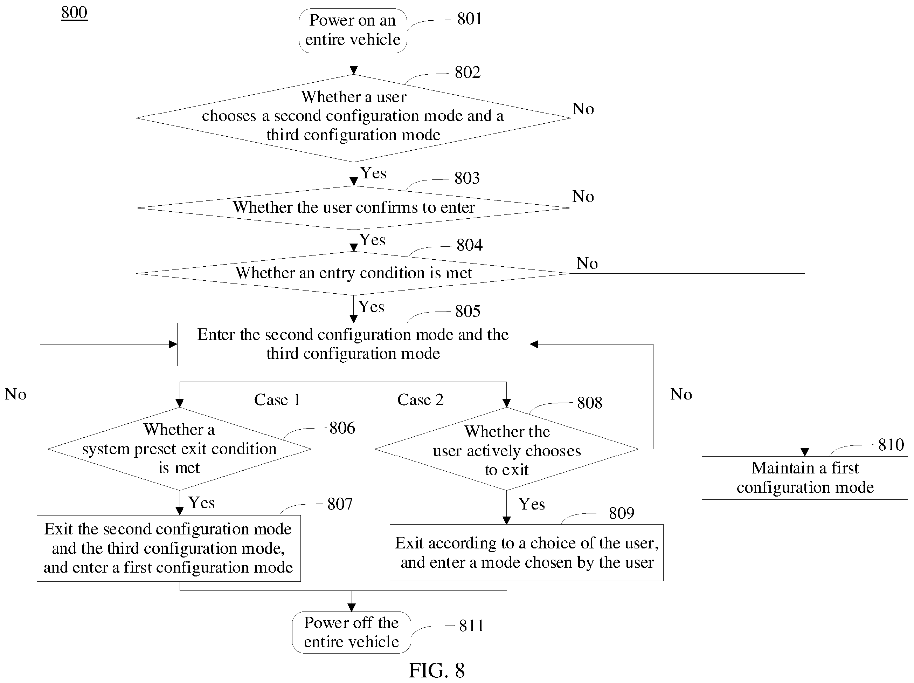

The following describes a specific implementation in this embodiment of this application by using an example with reference to FIG. 8. It should be understood that a procedure 800 shown in FIG. 8 is merely an example, and does not constitute a limitation on the solutions of this application.

FIG. 8 is an example diagram of a vehicle control procedure according to an embodiment of this application. As shown in FIG. 8, the procedure 800 includes steps S801 to S811. The following describes these procedures.

S801: Power on an entire vehicle.

S802: Determine whether a user chooses a second configuration mode and a third configuration mode. If the user chooses the second configuration mode and the third configuration mode, continue to perform S803; or if the user does not choose the second configuration mode and the third configuration mode, perform S810 to maintain a first configuration mode.

S803: Determine whether the user confirms to enter.

Specifically, after the user chooses the second configuration mode and the third configuration mode, the user is prompted by using a pop-up window on a vehicle-mounted center console screen, so that the user reconfirms whether to enter the second configuration mode and the third configuration mode. If the user reconfirms, continue to perform S804; or if the user does not confirm or cancel entering, perform S810 to maintain the first configuration mode.

S804: Determine whether an entry condition is met. Specifically, it is determined whether an entry condition of the second configuration mode and the third configuration mode is met. If the entry condition is met, continue to perform S805; or if the entry condition is not met, perform S810 to maintain the first configuration mode.

S805: Enter the second configuration mode and the third configuration mode. That is, the vehicle runs in the second configuration mode and the third configuration mode.

S806: Determine whether a system preset exit condition is met. If the condition is met, continue to perform S807; or if the condition is not met, continue to perform S805 to maintain the second configuration mode and the third configuration mode.

S807: Exit the second configuration mode and the third configuration mode, and enter the first configuration mode.

S808: Determine whether the user actively chooses to exit. If the user chooses to actively exit, continue to perform S809; or if the user does not choose to actively exit, continue to perform S805 to maintain the second configuration mode and the third configuration mode.

Optionally, the user may actively choose to exit the second configuration mode and the third configuration mode, or may actively choose to exit only the third configuration mode and maintain the second configuration mode.

S809: Exit according to a choice of the user, and enter a mode chosen by the user. Specifically, if the user chooses to exit the third configuration mode, it means that the mode chosen by the user is the second configuration mode. If the user chooses to exit the second configuration mode and the third configuration mode, it means that the mode chosen by the user is the first configuration mode.

S810: Maintain the first configuration mode.

S811: Power off the entire vehicle.

After the vehicle arrives at a destination, the entire vehicle needs to be powered off.

It should be noted that based on the foregoing step S805, if the exit conditions S806 and S808 are not met in an entire running process of the vehicle, when the vehicle arrives at the destination, the vehicle may be directly powered off based on the second configuration mode and the third configuration mode.

Optionally, when the entire vehicle is powered off, the vehicle may memorize a configuration mode of the vehicle before the power-off, so that the vehicle may continue to be controlled based on the configuration mode after the entire vehicle is powered on next time. Alternatively, the vehicle may not memorize a configuration mode of the vehicle before the power-off, and the vehicle is directly controlled based on a default configuration mode of a system after the entire vehicle is powered on next time. This is not limited in this embodiment of this application.

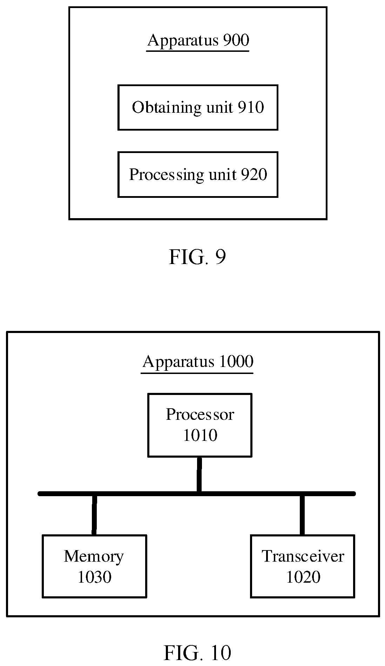

FIG. 9 is an example diagram of a vehicle control apparatus according to an embodiment of this application. The apparatus 900 may be disposed in the vehicle 100, and may be specifically disposed in the computing platform 150 of the vehicle 100, or may be disposed in an electronic device associated with the vehicle 100. The vehicle includes a battery and a range extender, and a configurable mode of the vehicle includes a first configuration mode, a second configuration mode, and a third configuration mode. When the first configuration mode is activated, the range extender enters a first operating mode when an actual SOC value of the battery is less than or equal to a first threshold; and in the first operating mode, the range extender is configured to supply power to the vehicle. When the second configuration mode is activated, the range extender enters the first operating mode when the actual SOC value of the battery is less than or equal to a second threshold, where the second threshold is less than the first threshold. When the third configuration mode is activated, the range extender enters the first operating mode or a second operating mode when the actual SOC value of the battery is less than or equal to a third threshold. In the second operating mode, the range extender is configured to idle, so that the range extender is in a state of preparing for output, where the third threshold is less than or equal to the first threshold and greater than the second threshold.

The apparatus 900 includes an obtaining module 910 and a processing module 920. When the second configuration mode and the third configuration mode are in an active state, and the SOC value of the battery is less than or equal to the third threshold, the obtaining module 910 is configured to obtain first status information of the vehicle, where the first status information includes a power demand of the vehicle; and the processing module 920 is configured to determine, based on the first status information, whether the range extender enters the first operating mode or the second operating mode.

Optionally, if output power of the battery is greater than or equal to the power demand of the vehicle, the processing module 920 may be further configured to control the range extender to operate in the second operating mode; or if output power of the battery is less than the power demand of the vehicle, the processing module 920 may be further configured to control the range extender to operate in the first operating mode.

Optionally, the obtaining module 910 may be further configured to obtain a user instruction, where the user instruction instructs to activate the second configuration mode and the third configuration mode; and the processing module 920 may be further configured to control to activate the second configuration mode and the third configuration mode according to the user instruction.

Optionally, the obtaining module 910 may be further configured to obtain second status information of the vehicle, where the second status information of the vehicle includes a power-on status of the vehicle, a state of charge of the battery, and a first ambient temperature status of the vehicle; the processing module 920 may be further configured to determine whether the second status information of the vehicle meets an entry condition of the second configuration mode and the third configuration mode; and if the second status information of the vehicle meets the entry condition, the processing module 920 may be further configured to control to activate the second configuration mode and the third configuration mode; or if the second status information of the vehicle does not meet the entry condition, the processing module 920 may be further configured to control to activate or maintain the first configuration mode.

Optionally, when the second configuration mode and the third configuration mode are in the active state, the obtaining module 910 may be further configured to obtain third status information of the vehicle, where the third status information of the vehicle includes a speed status of the vehicle, a second ambient temperature status of the vehicle, a climbing status of the vehicle, and an on-off status of the second configuration mode of the vehicle; and the processing module 920 may be further configured to determine whether the third status information of the vehicle meets an exit condition of the second configuration mode and the third configuration mode; and if any item in the third status information of the vehicle meets the exit condition, the processing module 920 may be further configured to control to exit the second configuration mode and the third configuration mode; or if none of the items in the third status information of the vehicle meets the exit condition, the processing module 920 may be further configured to control to maintain the second configuration mode and the third configuration mode to be in the active state.

Optionally, when the range extender is in an active state, the processing module 920 may be further configured to control to activate the vehicle to enter the second configuration mode; or control to activate the vehicle to enter the second configuration mode and the third configuration mode.

FIG. 10 is a block diagram of a control apparatus according to an embodiment of this application. Optionally, the apparatus 1000 may be specifically a computer device. The apparatus 1000 shown in FIG. 10 may include a processor 1010, a transceiver 1020, and a memory 1030. The processor 1010, the transceiver 1020, and the memory 1030 are connected through an internal connection path. The memory 1030 is configured to store instructions. The processor 1010 is configured to execute the instructions stored in the memory 1030. The transceiver 1020 receives/sends some parameters. Optionally, the memory 1030 may be coupled to the processor 1010 by using an interface, or integrated with the processor 1010.

It should be noted that the transceiver 1020 may include but is not limited to a transceiver apparatus of an input/output interface (input/output interface), to implement communication between the apparatus 1000 and another device or a communication network.

The processor 1010 may be a general-purpose CPU, a microprocessor, an ASIC, a GPU, or one or more integrated circuits, and is configured to execute a related program, to implement the control method in the method embodiments of this application. The processor 1010 may alternatively be an integrated circuit chip, and has a signal processing capability. In a specific implementation process, the steps of the navigation method in this application may be completed by using a hardware integrated logic circuit or instructions in a form of software in the processor 1010. The processor 1010 may alternatively be a general-purpose processor, a DSP, an ASIC, an FPGA or another programmable logic device, a discrete gate or a transistor logic device, or a discrete hardware component. The methods, the steps, and the logical block diagrams disclosed in embodiments of this application may be implemented or performed. The general-purpose processor may be a microprocessor, or the processor may be any conventional processor or the like. Steps of the methods disclosed with reference to embodiments of this application may be directly executed and completed by a hardware decoding processor, or may be executed and completed by using a combination of hardware and software modules in a decoding processor. The software module may be located in a mature storage medium in the art, for example, a random access memory, a flash memory, a read-only memory, a programmable read-only memory, an electrically erasable programmable memory, or a register. The storage medium is located in the memory 1030. The processor 1010 reads information in the memory 1030, and performs the control method in embodiments of this application in combination with hardware of the processor 1010.

The memory 1030 may be a read-only memory (read-only memory, ROM), a static storage device, a dynamic storage device, or a random access memory (random access memory, RAM).

The transceiver 1020 uses a transceiver apparatus, for example, but not limited to, a transceiver, to implement communication between the apparatus 1000 and another device or a communication network. For example, when the apparatus 1000 is disposed in a vehicle, user information, ambient information, vehicle status information, and the like may be obtained by using the transceiver 1020.

An embodiment of this application further provides a computer program product. The computer program product includes computer program code. When the computer program code is run on a computer, the computer is enabled to implement the method in the foregoing embodiments.

An embodiment of this application further provides a computer-readable storage medium. The computer-readable medium stores program code or instructions. When the computer program code or the instructions are executed by a processor of a computer, the processor is enabled to implement the method in the foregoing embodiments.

An embodiment of this application further provides a chip, including a processor that is configured to read instructions stored in a memory, and when the processor executes the instructions, the chip is enabled to implement the method in the foregoing embodiments.

A person of ordinary skill in the art may be aware that the units and algorithm steps in the examples described with reference to embodiments disclosed in this specification may be implemented by electronic hardware or a combination of computer software and electronic hardware. Whether the functions are performed by hardware or software depends on particular applications and design constraints of the technical solutions. A skilled person may use different methods to implement the described functions for each particular application, but it should not be considered that the implementation goes beyond the scope of this application.

It may be clearly understood by a person skilled in the art that for the purpose of convenient and brief description, and for a detailed operating process of the foregoing system, apparatus, and unit, refer to a corresponding process in the foregoing method embodiments, and details are not described herein again.

In several embodiments provided in this application, it should be understood that the disclosed system, apparatus, and method may be implemented in other manners. For example, the described apparatus embodiments are merely examples. For example, the division of units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between apparatuses or units may be implemented in electrical, mechanical, or other forms.

The units described as separate parts may or may not be physically separate, and parts displayed as units may or may not be physical units, and may be located in one location, or may be distributed on a plurality of network units. Some or all of the units may be chosen according to actual requirements to achieve the objectives of the solutions of embodiments.

In addition, functional units in embodiments of this application may be integrated into one processing unit, each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, for example, a USB flash drive, a removable hard disk, a ROM, a RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A vehicle control method, wherein a vehicle comprises a battery and a range extender, and a configurable mode of the vehicle comprises a first configuration mode, a second configuration mode, and a third configuration mode;
when the first configuration mode is activated, the range extender enters a first operating mode when a state of charge SOC value of the battery is less than or equal to a first threshold; and in the first operating mode, the range extender is configured to supply power to the vehicle;
when the second configuration mode is activated, the range extender enters the first operating mode when the SOC value of the battery is less than or equal to a second threshold, wherein the second threshold is less than the first threshold; or
when the third configuration mode is activated, the range extender enters the first operating mode or a second operating mode when the SOC value of the battery is less than or equal to a third threshold, wherein the third threshold is less than or equal to the first threshold and greater than the second threshold; and in the second operating mode, the range extender is configured to idle; and
the method comprises:
obtaining first status information of the vehicle when the second configuration mode and the third configuration mode are in an active state and the SOC value of the battery is less than or equal to the third threshold, wherein the first status information comprises a power demand of the vehicle; and
determining, based on the first status information, whether the range extender enters the first operating mode or the second operating mode.

2. The control method according to claim 1, wherein the determining, based on the first status information, whether the range extender enters the first operating mode or the second operating mode comprises:
if output power of the battery is greater than or equal to the power demand of the vehicle, controlling the range extender to operate in the second operating mode; or
if output power of the battery is less than the power demand of the vehicle, controlling the range extender to operate in the first operating mode.

3. The control method according to claim 1 or 2, wherein the method further comprises:
obtaining a user instruction, wherein the user instruction instructs to activate the second configuration mode and the third configuration mode; and
controlling to activate the second configuration mode and the third configuration mode according to the user instruction.

4. The control method according to any one of claims 1 to 3, wherein the method further comprises:
obtaining second status information of the vehicle, wherein the second status information of the vehicle comprises a power-on status of the vehicle, a state of charge of the battery, and a first ambient temperature status of the vehicle;
determining whether the second status information of the vehicle meets an entry condition of the second configuration mode and the third configuration mode; and
if the second status information of the vehicle meets the entry condition, controlling to activate the second configuration mode and the third configuration mode; or if the second status information of the vehicle does not meet the entry condition, controlling to activate or maintain the first configuration mode.

5. The control method according to any one of claims 1 to 4, wherein when the second configuration mode and the third configuration mode are in the active state, the method further comprises:
obtaining third status information of the vehicle, wherein the third status information of the vehicle comprises a speed status of the vehicle, a second ambient temperature status of the vehicle, a climbing status of the vehicle, and an on-off status of the second configuration mode of the vehicle;
determining whether the third status information of the vehicle meets an exit condition of the second configuration mode and the third configuration mode; and
if any item in the third status information of the vehicle meets the exit condition, controlling to exit the second configuration mode and the third configuration mode; or
if none of the items in the third status information of the vehicle meets the exit condition, controlling the second configuration mode and the third configuration mode to be in the active state.

6. The control method according to any one of claims 1 to 5, wherein when the range extender operates in the first operating mode, the method further comprises:
controlling to activate the second configuration mode; or controlling to activate the second configuration mode and the third configuration mode.

7. A vehicle control apparatus, wherein a vehicle comprises a battery and a range extender, and a configurable mode of the vehicle comprises a first configuration mode, a second configuration mode, and a third configuration mode;
when the first configuration mode is activated, the range extender enters a first operating mode when a state of charge SOC value of the battery is less than or equal to a first threshold; and in the first operating mode, the range extender is configured to supply power to the vehicle;
when the second configuration mode is activated, the range extender enters the first operating mode when the SOC value of the battery is less than or equal to a second threshold, wherein the second threshold is less than the first threshold; or
when the third configuration mode is activated, the range extender enters the first operating mode or a second operating mode when the SOC value of the battery is less than or equal to a third threshold, wherein the third threshold is less than or equal to the first threshold and greater than the second threshold; and in the second operating mode, the range extender is configured to idle; and
the apparatus comprises:
an obtaining module, configured to obtain first status information of the vehicle when the second configuration mode and the third configuration mode are in an active state and the SOC value of the battery is less than or equal to the third threshold, wherein the first status information comprises a power demand of the vehicle; and
a processing module, configured to determine, based on the first status information, whether the range extender enters the first operating mode or the second operating mode.

8. The control apparatus according to claim 7, wherein
if output power of the battery is greater than or equal to the power demand of the vehicle, the processing module is further configured to control the range extender to operate in the second operating mode; or
if output power of the battery is less than the power demand of the vehicle, the processing module is further configured to control the range extender to operate in the first operating mode.

9. The control apparatus according to claim 7 or 8, wherein
the obtaining module is further configured to obtain a user instruction, wherein the user instruction instructs to activate the second configuration mode and the third configuration mode; and
the processing module is further configured to control to activate the second configuration mode and the third configuration mode according to the user instruction.

10. The control apparatus according to any one of claims 7 to 9, wherein
the obtaining module is further configured to obtain second status information of the vehicle, wherein the second status information of the vehicle comprises a power-on status of the vehicle, a state of charge of the battery, and a first ambient temperature status of the vehicle;
the processing module is further configured to determine whether the second status information of the vehicle meets an entry condition of the second configuration mode and the third configuration mode; and
if the second status information of the vehicle meets the entry condition, the processing module is further configured to control to activate the second configuration mode and the third configuration mode; or
if the second status information of the vehicle does not meet the entry condition, the processing module is further configured to control to activate or maintain the first configuration mode.

11. The control apparatus according to any one of claims 7 to 10, wherein when the second configuration mode and the third configuration mode are in the active state, the obtaining module is further configured to:
obtain third status information of the vehicle, wherein the third status information of the vehicle comprises a speed status of the vehicle, a second ambient temperature status of the vehicle, a climbing status of the vehicle, and an on-off status of the second configuration mode of the vehicle;
the processing module is further configured to determine whether the third status information of the vehicle meets an exit condition of the second configuration mode and the third configuration mode; and
if any item in the third status information of the vehicle meets the exit condition, the processing module is further configured to control to exit the second configuration mode and the third configuration mode; or
if none of the items in the third status information of the vehicle meets the exit condition, the processing module is further configured to control the second configuration mode and the third configuration mode to be in the active state.

12. The control apparatus according to any one of claims 7 to 11, wherein when the range extender operates in the first operating mode, the processing module is further configured to:
control to activate the second configuration mode; or control to activate the second configuration mode and the third configuration mode.

13. A vehicle control apparatus, comprising an input/output interface, a processor, and a memory, wherein the processor is configured to control the input/output interface to receive or send a signal or information, the memory is configured to store a computer program, and the processor is configured to invoke the computer program from the memory and run the computer program, so that the control apparatus performs the control method according to any one of claims 1 to 6.

14. A vehicle, comprising the control apparatus according to any one of claims 7 to 13.

15. A computer-readable storage medium, wherein the computer-readable storage medium stores program code, and when the program code is run on a computer, the computer is enabled to perform the control method according to any one of claims 1 to 6.
